# EUROPEAN PATENT SPECIFICATION

(11) **EP 3 945 832 B1**
(45) Date of publication and mention of the grant of the patent: **26.07.2023**
(21) Application number: 20714178.9
(22) Date of filing: 23.03.2020
(51) Int. Cl.: A22B 5/00, A22C 18/00

(54) **REMOVAL OF ABDOMINAL FAT FROM A SLAUGHTERED ANIMAL**
ENTFERNUNG VON BAUCHFETT AUS SCHLACHTTIEREN
ÉLIMINATION DE LA GRAISSE ABDOMINALE D'UN ANIMAL ABATTU

(30) Priority: 25.03.2019 DK PA201900356
(43) Date of publication of application: 09.02.2022
(73) Proprietor: Teknologisk Institut, 2630 Taastrup (DK)
(72) Inventor: ANDERSEN, Peter, 2630 Taastrup (DK); THAARUP, Klaus, 2630 Taastrup (DK); BOCK, Mikkel, 2630 Taastrup (DK); HANSEN, Niels Worsøe, 2630 Taastrup (DK); JOHANSEN, Simon Nybo, 2630 Taastrup (DK); HANSEN, Kurt, 2630 Taastrup (DK)
(86) International application number: PCT/EP2020/057973
(87) International publication number: WO 2020/193471

(56) References cited:
- EP-A1- 0 706 761
- WO-A1-98/15186
- JP-A- 2005 006 634
- US-A- 4 901 398

## Description

### TECHNICAL FIELD

This invention relates to a device, a system and a method for removal of abdominal fat, leaf fat, or leaf lard from a slaughtered animal, i.e. from carcasses, and especially from carcasses of pigs.

### BACKGROUND ART

One of the many steps involved in carcass processing, taking place at abattoirs, is the removal of abdominal fat, located in two strips along the inner surfaces of each of the carcass halves. These strips are often referred to as the "leaf lard" due to their leaf-like shape, in which the lard starts with a relatively narrow width near the lower end of a carcass suspended by its hind legs.

Abdominal fat or leaf lard is typically removed by loosening the lower edge of the lard, then pulling it upwards, which causes it to peel away from the inner side of the carcass. It represents very hard labour, and a lot of repetitive work, for manually removing these "belly strips", especially because the leaf lard shall be pulled upwards and outwards, thus representing very stressful work positions.

Therefore, steps to relieve this hard work has been taken, and devices and methods for removal of abdominal lard from slaughtered animals have been suggested.

Thus EP836804, EP706761, WO200054598 and WO2016074993 describe an abdominal fat removing device comprising a gripping means made from a rotatably drivable winding mandrel that can wind up the fat layer during rotary driving.

US4901398 describes a machine usable for pulling off leaf lard from hog carcasses, which machine comprises an optical type sensor capable of assessing the height of the suspended hog, and thus capable to direct the winding mandrel that can wind up the fat layer during rotary driving.

WO9815186 describes a method involving the use of a seizure device and a suction device for gripping and tearing away leaf lard from a slaughtered animal.

Finally, JP2005006634 describes a device for automatic removal of abdominal fat or leaf lard from the abdominal wall of a slaughtered animal.

However, the leaf lard removing device and method described herein have never been described.

### SUMMARY OF THE INVENTION

The present invention provides a novel principle for removing abdominal fat, leaf fat, or leaf lard from the carcass of a slaughtered pig/hog. The principle of the invention is well suited to take part of an automated process, implemented with the use of industrial robots, thus avoiding the manual hard work often associated with this task, and facilitating an industrial scale process at modern abattoirs.

The principle of the present invention resides in the engagement of a twin-belt/double-belt device, that can effectively grab and hold, and strip off the slippery abdominal fat, and subsequently discharge the fat item for final collection of the total by-product.

Thus, in its first aspect, the invention provides a device (1) for automatic removal of abdominal fat or leaf lard (3), or a part hereof, from the abdominal wall of a slaughtered animal (4), which device comprises a gripping means for gripping (1) said abdominal fat or leaf lard (3).

In another aspect the invention provides a system for automatic removal of abdominal fat or leaf lard (3), or a part thereof, from a slaughtered animal/carcass (4), presented at a conveyor/slaughter line (5) with an open abdominal cavity.

In a further aspect, the invention provides a method for automatic removal of abdominal fat or leaf lard (3), or a part thereof, from a slaughtered animal (4), consisting of two half-bodies, suspended by the hind legs from a conveyor/slaughter line (5).

Other objects of the invention will be apparent to the person skilled in the art from reading the following detailed description and accompanying drawings.

### BRIEF DESCRIPTION OF THE DRAWINGS

The present invention is further illustrated by reference to the accompanying drawing, in which:

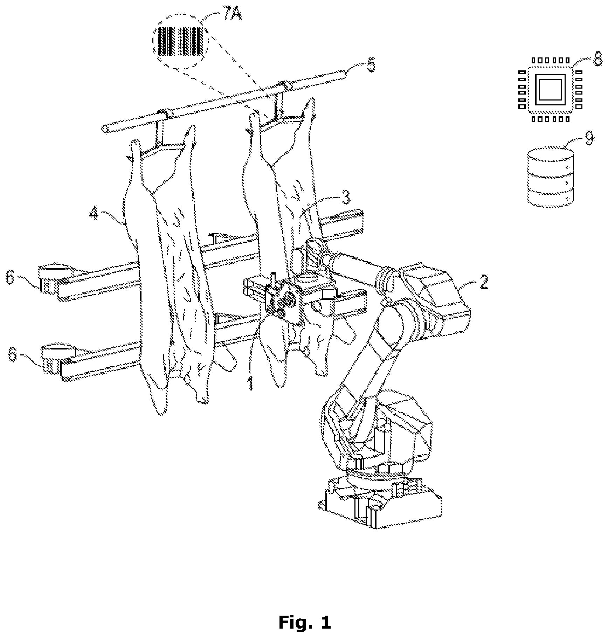

Fig. 1 shows the essential elements of the system of the invention (1): Industrial robot (2); Abdominal fat/leaf lard (3); Carcass to be processed (4); Conveyor/slaughter line (5); Fixture supporting the carcass during processing (6); Identification provider (7A); Controller/processing means (8); Central database (9); and

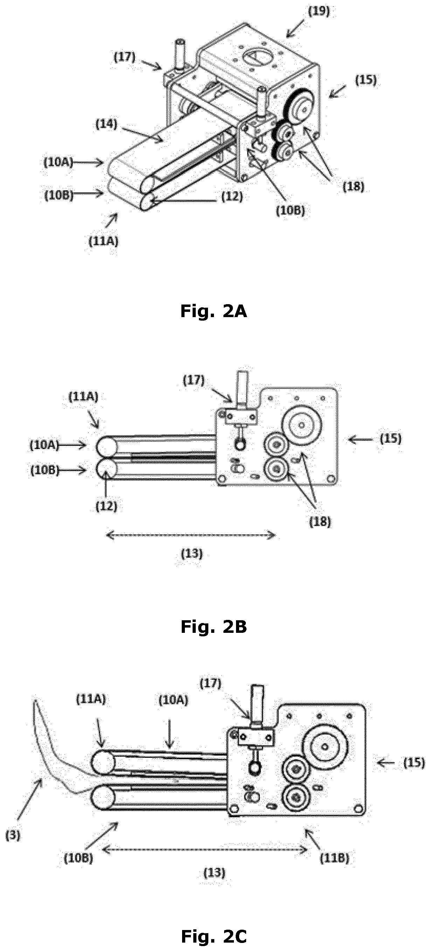

Figs. 2A, 2B and 2C show the essential elements of the device (1) of the invention: Upper band of roller assembly (10A); Lower band of roller assembly (10B); Front end/gripping end of roller assembly (11A); Rear end/motor housing end of roller assembly (11B); Roller/wheel (12); Wheel base/length of band (13); Pattern/cleats/elements on band surface (14); Motor housing (15); Spring (16); Gear box (17); Robot mounting means (18).

### DETAILED DISCLOSURE OF THE INVENTION

When slaughtering animals at abattoirs, the abdominal cavity of the animal is opened, and bowel sets and pluck sets, and later the leaf lard, located in two strips along the inner surfaces of the carcass halves, is removed.

This is typically done by loosening the lower edge of the lard from the pig carcass, hanging with its head downwards by means of a hook engaged in the Achilles tendon of the hog's hind legs, thus opening the chest to intervention by the tool of the invention, then pulling the lard upwards, which causes the lard to peel away from the inner side of the carcass.

### The device of the invention

In its first aspect, the invention provides a device (1) for removing a layer of abdominal fat, leaf fat, or leaf lard (3), or a part hereof, from the abdominal wall of a slaughtered animal (4), at a conveyor/slaughter line (5), of which slaughtered animal the abdominal cavity has been opened beforehand, and which device comprises a gripping means (1) for gripping said abdominal fat (3).

The device of the invention may be characterized in that the gripping means (1) comprises a twin-belt arrangement (10), having two or more belts (10A, 10B, ...) capable of rotating by means of two or more rollers/wheels (12), the two belts being mounted one above the other as a roller assembly (10), fixed at the motor housing end (11B) and open at the gripping end (11A), and wherein the belts of the twin-belt arrangement (10) are held together with a spring force (16), which, when in action, responds to the pressure of the abdominal fat load (3), and both belts fitted with cleats (14) to ensure a firm grip of the abdominal fat (3).

The belts of the roller-assembly may be powered by a servo motor, that can be controlled by the robot (2).

The size of the roller assembly for use according to the invention should be adapted to the typical opening of the abdominal cavity of the slaughtered animal.

The width of the roller assembly should be sufficiently to grab and hold the leaf lard to be removed. In one embodiment, the width of the roller assembly is in the range of from about 2 to about 20 cm. In another embodiment, the width of the roller assembly is in the range of from about 5 to about 15 cm. In a third embodiment, the width of the roller assembly is in the range of from about 8 to about 12 cm, i.e. around 10 cm.

The length of the roller assembly should be sufficiently to enter and reach the bottom of the abdominal cavity to grab and hold the leaf lard to be removed. In one embodiment, the length of the wheelbase of the roller assembly is in the range of from about 10 to about 50 cm. In another embodiment, the length of the wheelbase of the roller assembly is in the range of from about 20 to about 40 cm, e.g. about 30 cm.

The belts of the roller-assembly (10) for use according to the invention should be made from a material approved for food contact (food contact substance formulation), and which allows its functioning as a belt, while also allowing for proper cleaning of the belt. Useful materials include e.g. polyurethane, nylon, and similar polymeric substances.

To increase its hold on the leaf lard, the belts of the roller-assembly (10) for use according to the invention also should hold a pattern on its outer surface. The choice of pattern may depend on the specific nature of the abdominal fat to be processed.

Experiments with different grips have shown that cleats/elements of different sizes and shapes may be attached to the band. The element may be of any form, e.g. round or square, and examples of useful shapes include spikes, triangles, cones, truncated cones, cylinders, cubes, etc.

The size of the element attached to the surface of the band also may vary. Examples with elements of different sizes indicate that element protruding the surface of the band may be in the range of from about 1 to about 10 mm, e.g. of from 1 to 8 mm, or from 2-7 mm, or from 2 to 5 mm.

The two or more belts of the roller assembly (10) for use according to the invention may be held together with a spring force (16), which, when in action, can respond to the pressure of the abdominal fat (3), which is trapped between the two arms of the roller assembly.

Springs for use according to the invention, capable of providing the desired force, are commercially available. In one embodiment, the spring provides a force in the range of about 10 N to about 60 N, e.g. of from about 20 N to about 40 N, or of around 30 N.

The two or more rollers/wheels (12), rotating the two or more belts of the roller-assembly (10), shall be powered by a motor (15A), e.g. electrical or similar, located in the motor housing (15). Such motors, capable of providing the desired velocity, are commercially available.

In one embodiment, the motor for use according to the invention may provide a belt velocity in the range of about 100 to about 600 mm/second, e.g. in the range of about 200 to about 500 mm/second, in the range of about 300 to about 400 mm/second.

### Industrial robots

The leaf lard removing device (1) of the invention shall be mounted on an industrial robot (2).

The industrial robot (2) for use according to the invention may be any commercially available industrial robot. Industrial robots may be classified based on their coordinate systems, i.e. based on reachable coordinates of a point on the end-effector, and include Cartesian robots (when arms of a robot move in the XYZ rectangular coordinate system), Cylindrical robots (when arms of a robot move in one angular and two linear directions), Spherical robots (the arms move in two angular and one linear direction), SCARA robots (Selective Compliance Arm for Robotic Assembly; have two parallel revolute joints providing compliance in a selected plane), and Articulated robots (also known as the anthropomorphic robot, the robot arm has 3 revolute joints).

The industrial robot (2) for use according to the invention may be a multiaxial industrial robot, automatically controlled and programmable in more axes, e.g. in six or more axes, and which robot may either be fixed in place, or mobile, and suited for use in industrial automation applications.

### The system of the invention

In another aspect, the invention provides a system for automatic removal of abdominal fat, leaf fat, or leaf lard (3), or a part thereof, from a slaughtered animal/carcass (4), presented at a conveyor/slaughter line (5) with an open abdominal cavity.

The system of the invention for removing leaf lard (3) may be characterised by comprising the following elements:
- an inlet conveyor (5) conveying the carcass to be processed (4);
- one or more fixtures (6), which may be movable or static, to fix or support at least a part of the slaughtered animal (4) during processing;
- an industrial robot (2), in operation with the processing means (8), which industrial robot (2) is mounted with the leaf lard removing device (1) according to any one of claims 1-4; and
- a processing means (8), in communication with the industrial robot (2).

In one embodiment, the fixture (6) is a movable fixture, adapted to accompany the conveyed carcass (4), thus providing a more solid support of the carcass during processing.

Alternatively, the fixture (6) is a static fixture, over which the carcass is pulled, while leaning against the fixture during processing.

In one embodiment, the processing means (8), communicating with the robot for use according to the invention, is programmed to aim at a particular fixed point, whether in height and/or in width. Next, if the carcass moves along the conveyor while being processed, the robot is programmed to behave synchronously, and to follow the carcass.

According to this embodiment, the processing means (8) comprises the information necessary for operating the industrial robot (2) and need not be in communication with any assisting or external database.

In another embodiment, the system of the invention comprises the processing means (8), in communication with the industrial robot (2), and in communication with a central database (9) containing data about the slaughtered animal/carcass to be processed.

### The central database

Usually, at modern slaughterhouses, information about each carcass may be stored in a central database (9), from which database this information may again be retrieved, e.g. via an assigned identification (ID) number (7A). Such information usually includes details about the origin of the animal, in particular about differences in morphology, and of the size of the carcass, incl. length and weight, etc.

To perform an automatic process, it is important that the belly strips are approached from the right angle, e.g. are attached in the vicinity of their lower part. However, the fact that these lower parts are located in the horizontal level allows for some variations linked to the morphology and size of the animals.

The system of the invention therefore may benefit from having access to this database (9). According to this embodiment, the system of the invention comprises a processing means (8), in communication with the industrial robot (2), and in communication with a central database (9) containing data about the slaughtered animal/carcass to be processed.

Having access to information about e.g. length or weight of a particular animal, the robot (2) can be programmed to aim at a point in height and/or width within the abdominal cavity, that is variable from carcass to carcass.

In one embodiment, the industrial robot (2) for use according to the invention is programmed to attack at a point at a certain, predetermined height.

In another embodiment, the industrial robot (2) for use according to the invention is programmed to aim for a point which may vary from carcass to carcass and is calculated by the processor (8) based on information about the animal (4) in question.

The industrial robot (2) may receive centrally recorded data about the carcass (4) in question by calculating the ID (7A) of the animal based on its number in the arriving order, i.e. determined "by rhythm".

Alternatively, the industrial robot (2) may receive centrally recorded data about the carcass (4) in question, by reading e.g. the ID (7A) of the carcass (4).

Therefore, in another embodiment, the system comprises an inlet conveyor (5), which carries a hanger comprising an identification provider (7A) holding (previously recorded) data of the carcass in question (4), and which system further comprises an identification reader (7B), in communication with the processing means (8).

### Identification means

The identification means (7) for use according to the invention may be any existing/commercial identification tool, capable of receiving and storing data, e.g. an identification (ID) number, which data may later be accessed and read.

The identification means (7) may comprise an identification provider (7A) and an identification reader (7B).

The identification provider (7A) may e.g. be an RFID-tag (Radio Frequency Identification) that can receive and store data, which data may later be accessed and read using an RFID-reader.

The identification provider (7A) shall accompany the animal in question, e.g. attached to the hanger in which the carcass may be suspended during transport on the conveyor/slaughter line (5).

The identification reader (7B) should be located near the workplace, e.g. behind the conveyor/slaughter line (5), or it may be mounted on the performing robot (2).

### The fixture

The fixture (6) for use according to the invention is a firm boom that shall support and hold the carcass to be processed (4), hanging in its ankles, with its head-end facing downwards, during processing, where the industrial robot (2) approaches the abdomen and grabs the abdominal fat (3).

One or more fixtures (6), as needed to fix the carcass, may be applied, and the exact position of the fixture depends on the type and size of animal subjected to processing according to the invention, and may be adjustable, and finally determined by operator.

In one embodiment, the two half-bodies, conveyed and suspended by its hind legs on a gambrel/hang-iron, are supported in the back by the fixture used according to the invention, placed in the level of the sternum.

### The processing means

The processing means (8) for use according to the invention may be any commercially available processor/PC, in operation with, and capable of receiving and processing data obtained from the central database (9), and of guiding the industrial robot (2).

In one embodiment, the processor (8) is in communication with the inlet conveyor (5), and determines and adjusts, e.g. in communication with an encoder, the speed by which the inlet conveyor (5) transports the incoming carcass (4).

### Cleaning steps

In a further embodiment, the leaf lard removing device (1) of the invention may be subjected to one or more cleaning steps during processing.

Cleaning may be accomplished in between the processing of each carcass, or at pre-determined intervals, e.g. for every fifth treatment, or the treatment frequency may be determined in relation to the type of animal being treated.

Cleaning the device may e.g. be accomplished by directing the device, or, more particularly, the roller assembly (10) to a water treatment step, during which water or water vapour/steam may be directed to the equipment.

### The method of the invention

In another aspect, the invention relates to a method for automatic removal of abdominal fat or leaf lard (3), or a part thereof, from a slaughtered animal (4), consisting of two half-bodies, suspended by the hind legs from a slaughter line (5).

The method of the invention may be characterised by comprising the subsequent steps of:
i. providing a carcass to be processed (4) on an inlet conveyor (5), supported by one or more fixtures (6), which may be movable or static;
ii. directing the leaf lard removing device (1) of claims 1-4, mounted on an industrial robot (2), towards the abdominal fat (3) located inside one side of the two half-bodies of the carcass (4) to be processed;
iii. by manipulating the industrial robot (2) using a processing means (8), directing the leaf lard removing device (1) inwards into the abdominal cavity to catch and grab the lower part of abdominal fat (3) and lifting it upwards to causes it to peel away from the inner side of the carcass, for finally to pull back and release the leaf lard (3) from the carcass (4);
iv. withdrawing the leaf lard removing device (1) from the carcass (4) for rejecting and releasing the collected abdominal fat (3);
v. directing the leaf lard removing device (1) of claims 1-4 towards the abdominal fat (3) located at the other half-body of the carcass (4) being processed; and
vi. subjecting the other half-body of the carcass to steps i-iv above.

In one embodiment, before being processed, the diaphragm of the carcass in question is released, and the leaf lard has been loosened to about the level of the tenderloin tip.

In another embodiment, the industrial robot (2) for use according to the invention stands ready in a fixed starting position.

When the carcass (4) has arrived at the workstation, suspended from the conveyor (5) by its hind legs, the industrial robot (2) starts moving its tool (1) inside on of the inner faces of the hog's side. This may be done by placing the tool inside, at the middle part, of an inner face of one of the hog's side, and running sideways, so that it pushes the flank to the side. Then the robot (2) angles the tool (1) so that the tool is perpendicular to the leaf lard (3).

Next step may be that the belts (10A, 10B) of the twin-belt assembly (10) are started running and are moved upwards, while the tool is angled at about 45°, in order to get a better grip at the leaf lard (3). The belts are stopped from running when the tool has arrived at the end of the tenderloin. The tool (1) is then moved up over the carcass in order to get the final leaf lard pulled loose.

Having peeled of the abdominal fat, the tool (1) is lowered back to a fixed point to release and dispose of the leaf lard, and the belts are run the opposite way to reject the leaf lard from the belts. The leaf lard may e.g. be collected in a container.

Then the robot turns to the other side of the carcass, to release the abdominal fat from the other half-body, where the above steps may be repeated.

In one embodiment of the method of the invention, the carcass is supported by a movable fixture, adapted to accompany the conveyed carcass while on the fly. According to this embodiment, the robot (2) is guided by the processing device (8) to perform the above operations while the target is moving.

Even though some biological variation may occur, it is possible to initiate the abdominal fat removing process by aiming at a point, which is fixed in height, and the same from animal to animal, allowing the robot to run a fixed curve, which does not take into account the size of the hog.

Therefore, in another embodiment of the method, the industrial robot (2) for use according to the invention is programmed to attack at a point at a certain, predetermined height.

In a further embodiment of the method of the invention, the industrial robot (2) for use according to the invention is programmed to aim for a point which may vary from carcass to carcass and is calculated by the processor (8) based on information about the animal (4) in question.

The industrial robot (2) may receive centrally recorded data about the carcass (4) in question by calculating the ID (7A) of the animal based on its number in the arriving order, i.e. determined "by rhythm".

Alternatively, the industrial robot (2) may receive centrally recorded data about the carcass (4) in question, by reading e.g. the ID (7A) of the carcass (4).

Therefore, in another embodiment of the method, the system comprises an inlet conveyor (5), which carries a hanger comprising an identification provider (7A) holding (previously recorded) data of the carcass in question (4), and which system further comprises an identification reader (7B), in communication with the processing means (8).

### The slaughtered animal

The carcass to be subjected to the device, the system and/or the method of the invention may be of any animal origin, including pigs/hogs, cattle, and sheep (including rams and lambs).

The carcass to be subjected to the device, the system and/or the method of the invention preferably originates from a slaughtered pig/hog.

### List of reference signs

In the figures, identical structures, elements or parts that appear in more than one figure are generally labelled with the same numeral in all the figures in which they appear.
- 1.: Abdominal fat/leaf lard removing device/gripping means
- 2.: Industrial robot
- 3.: Abdominal fat, leaf fat, leaf lard, "belly strips"
- 4.: Carcass to be processed
- 5.: Conveyor/slaughter line
- 6.: Fixture supporting the carcass during processing
- 7.: Identification means
- 7A.: Identification provider/ID tag/RFID-tag/transponder
- 7B.: Identification reader/ID reader/RFID-reader
- 8.: Controller/processing means/CPU
- 9.: Central database
- 10.: Twin-belt/double-belt device/roller assembly
- 10A.: Upper band
- 10B.: Lower band
- 11A.: Front end/gripping end of roller assembly
- 11B.: Rear end/motor housing end of roller assembly
- 12.: Roller/wheel
- 13.: Wheelbase/length of band
- 14.: Pattern/cleats/elements on band surface
- 15.: Motor housing
- 15A.: Motor
- 16.: Spring
- 17.: Gear box
- 18.: Robot mounting means

## Claims

1. A device for automatic removal of abdominal fat or leaf lard (3), or a part hereof, from the abdominal wall of a slaughtered animal (4), which device comprises a gripping means for gripping (1) said abdominal fat or leaf lard (3), ***characterized in* that** the gripping means (1) comprises a twin-belt arrangement (10), having two or more belts (10A, 10B, ...) capable of rotating by means of two or more rollers/wheels (12), the two belts being mounted one above the other as a roller assembly, fixed at the motor housing end (11B) and open at the gripping end (11A), and wherein the belts are held together with a spring force (16), which, when in action, responds to the pressure of the abdominal fat load (3), and both belts fitted with cleats (14) to ensure a firm grip of the abdominal fat (3).

2. The device according to claim 1, wherein the two or more rollers/wheels (12), rotating the two or more belts (10A, 10B, ...), are powered by a motor (15A).

3. The device according to either one of claims 1-2, wherein the two or more belts of the twin-belt arrangement (10) are made from a material approved for food contact.

4. The device according to any one of claims 1-3, wherein the two or more belts holds a pattern on it outer surface (14).

5. A system for automatic removal of abdominal fat or leaf lard (3), or a part thereof, from a slaughtered animal/carcass (4), presented at a slaughter line (5) with an open abdominal cavity, which system comprises the following elements:
• an inlet conveyor (5) conveying the carcass to be processed (4);
• one or more fixtures (6), which may be movable or static, to fix or support at least a part of the slaughtered animal (4) during processing;
• an industrial robot (2), in operation with the processing means (8), which industrial robot (2) is mounted with the leaf lard removing device (1) according to any one of claims 1-4; and
• a processing means (8), in communication with the industrial robot (2), and in communication with a central database (9) containing data about the slaughtered animal/carcass to be processed.

6. The system of claim 5, wherein the fixture (6) is a movable fixture, adapted to accompany the conveyed carcass (4).

7. The system of either one of claims 5-7, wherein the inlet conveyor (5) carries an identification provider (7A) holding (previously recorded) data of the carcass in question (4), and which system further comprises an identification reader (7B), in communication with the processing means (8).

8. A method for automatic removal of abdominal fat or leaf lard (3), or a part thereof, from a slaughtered animal (4), consisting of two half-bodies, suspended by the hind legs from a slaughter line, which method comprises the subsequent steps of:
i. providing a carcass to be processed (4) on an inlet conveyor (5), supported by one or more fixtures (6), which may be movable or static;
ii. directing the leaf lard removing device (1) of claims 1-4, mounted on an industrial robot (2), towards the abdominal fat (3) located inside one side of the two half-bodies of the carcass (4) to be processed;
iii. by manipulating the industrial robot (2) using a processing means (8), directing the leaf lard removing device (1) inwards into the abdominal cavity to catch and grab the lower part of abdominal fat (3) and lifting it upwards to causes it to peel away from the inner side of the carcass, for finally to pull back and release the leaf lard (3) from the carcass (4);
iv. withdrawing the leaf lard removing device (1) from the carcass (4) for rejecting and releasing the collected abdominal fat (3);
v. directing the leaf lard removing device (1) of claims 1-4 towards the abdominal fat (3) located at the other half-body of the carcass (4) being processed; and
vi. subjecting the other half-body of the carcass to steps i-iv above.

9. The method of claim 10, wherein the fixture (6) is a movable fixture, adapted to accompany the conveyed carcass (4).

10. The method of either one of claims 8-9, wherein the inlet conveyor (5) carries an identification provider (7A) holding (previously recorded) data of the carcass in question (4), and which system further comprises an identification reader (7B), in communication with the processing means (8).

## Patentansprüche

1. Eine Vorrichtung zum automatischen Entfernen von Bauchfett oder Blattschmalz (3) oder einem Teil davon von der Bauchdecke eines geschlachteten Tieres (4), wobei die Vorrichtung ein Greifmittel zum Ergreifen (1) des Bauchfetts oder Blattes umfasst Schmalz (3), ***dadurch gekennzeichnet,* dass** das Greifmittel (1) eine Doppelriemenanordnung (10) mit zwei oder mehr Riemen (10A, 10B, ...) umfasst, die mittels zwei oder mehr Rollen/Rädern (12) rotieren können), wobei die beiden Riemen als Rollenanordnung übereinander gelagert, am Motorgehäuseende (11B) befestigt und am Griffende (11A) offen sind, und wobei die Riemen durch eine Federkraft (16) zusammengehalten werden, der im Betrieb auf den Druck der Bauchfettlast reagiert (3), und beide Gurte sind mit Stollen (14) ausgestattet, um einen festen Halt des Bauchfetts (3) zu gewährleisten.

2. Vorrichtung nach Anspruch 1, wobei die zwei oder mehr Rollen/Räder (12), die die zwei oder mehr Bänder (10A, 10B, ...) drehen, von einem Motor (15A) angetrieben werden.

3. Vorrichtung nach einem der Ansprüche 1-2, wobei die zwei oder mehr Bänder der Doppelbandanordnung (10) aus einem für den Lebensmittelkontakt zugelassenen Material gefertigt sind.

4. Vorrichtung nach einem der Ansprüche 1-3, wobei die zwei oder mehr Riemen auf ihrer Außenfläche (14) ein Muster halten.

5. Ein System zur automatischen Entfernung von Bauchfett oder Blattschmalz (3) oder einem Teil davon von einem geschlachteten Tier/Kadaver (4), das an einer Schlachtlinie (5) mit offener Bauchhöhle präsentiert wird, wobei das System Folgendes umfasst folgende Elemente:
• einen Einlassförderer (5), der den zu verarbeitenden Kadaver (4) befördert;
• eine oder mehrere Vorrichtungen (6), die beweglich oder statisch sein können, um zumindest einen Teil des geschlachteten Tieres (4) während der Verarbeitung zu fixieren oder zu stützen;
• einen Industrieroboter (2), der mit der Verarbeitungseinrichtung (8) in Betrieb ist und an dem die Vorrichtung (1) zum Entfernen von Blattfett nach einem der Ansprüche 1-4 montiert ist; und
• ein Verarbeitungsmittel (8), das mit dem Industrieroboter (2) und mit einer zentralen Datenbank (9) kommuniziert, die Daten über das zu verarbeitende geschlachtete Tier/den Schlachtkörper enthält.

6. System nach Anspruch 5, wobei die Halterung (6) eine bewegliche Halterung ist, die dazu geeignet ist, den beförderten Kadaver (4) zu begleiten.

7. Das System nach einem der Ansprüche 5 bis 7, wobei der Einlassförderer (5) einen Identifikationsgeber (7A) trägt, der (zuvor aufgezeichnete) Daten des betreffenden Schlachtkörpers (4) speichert, und wobei das System außerdem einen Identifikationsleser umfasst (7B), in Kommunikation mit den Verarbeitungsmitteln (8).

8. Ein Verfahren zur automatischen Entfernung von Bauchfett oder Blattschmalz (3) oder einem Teil davon von einem geschlachteten Tier (4), das aus zwei Halbkörpern besteht, die an den Hinterbeinen an einer Schlachtlinie aufgehängt sind, wobei das Verfahren Folgendes umfasst die folgenden Schritte:
i. Bereitstellen eines zu verarbeitenden Kadavers (4) auf einem Einlassförderer (5), der von einer oder mehreren Vorrichtungen (6) getragen wird, die beweglich oder statisch sein können;
ii. Richten der an einem Industrieroboter (2) montierten Vorrichtung (1) zum Entfernen von Blattschmalz (1) nach den Ansprüchen 1 bis 4 auf das Bauchfett (3), das sich innerhalb einer Seite der beiden Halbkörper des zu verarbeitenden Schlachtkörpers (4) befindet;
iii. durch Manipulieren des Industrieroboters (2) mithilfe eines Verarbeitungsmittels (8), Richten der Vorrichtung (1) zum Entfernen von Blattschmalz nach innen in die Bauchhöhle, um den unteren Teil des Bauchfetts (3) zu fangen und zu greifen, und Anheben nach oben, um dies zu bewirken zum Abziehen von der Innenseite des Kadavers, um schließlich das Blattschmalz (3) vom Kadaver (4) zurückzuziehen und zu lösen;
iv. Herausziehen der Vorrichtung (1) zum Entfernen von Blattschmalz aus dem Kadaver (4), um das gesammelte Bauchfett (3) abzuwerfen und freizugeben;
v. Richten der Vorrichtung (1) zum Entfernen von Blattschmalz nach den Ansprüchen 1 bis 4 auf das Bauchfett (3), das sich an der anderen Körperhälfte des zu verarbeitenden Schlachtkörpers (4) befindet; und
vi. Unterziehen der anderen Körperhälfte des Schlachtkörpers den oben genannten Schritten i-iv.

9. Verfahren nach Anspruch 10, wobei die Vorrichtung (6) eine bewegliche Vorrichtung ist, die dazu geeignet ist, den beförderten Kadaver (4) zu begleiten.

10. Verfahren nach einem der Ansprüche 8 bis 9, wobei der Einlassförderer (5) einen Identifikationsgeber (7A) trägt, der (zuvor aufgezeichnete) Daten des betreffenden Schlachtkörpers (4) speichert, und wobei das System außerdem einen Identifikationsleser umfasst (7B), in Kommunikation mit den Verarbeitungsmitteln (8).

## Revendications

1. Dispositif pour retirer automatiquement la graisse abdominale ou le saindoux en panne (3), ou une partie de celui-ci, de la paroi abdominale d'un animal abattu (4), lequel dispositif comprend un moyen de préhension pour saisir (1) ladite graisse abdominale ou saindoux en panne (3), ***caractérisé en* ce que** le moyen de préhension (1) comprend un agencement à double courroie (10), ayant deux ou plusieurs courroies (10A, 10B, ...) capables de tourner au moyen de deux ou plusieurs rouleaux/roues (12), les deux courroies étant montées l'une au-dessus de l'autre sous la forme d'un ensemble de rouleaux, fixé à l'extrémité du carter du moteur (11B) et ouvert à l'extrémité de préhension (11A), et dans lequel les courroies sont maintenues ensemble par une force de ressort (16), qui, lorsqu'elle est en action, répond à la pression de la charge de graisse abdominale (3), et les deux ceintures munies de taquets (14) pour assurer une prise ferme de la graisse abdominale (3).

2. Dispositif selon la revendication 1, dans lequel les deux ou plusieurs rouleaux/roues (12), entraînant en rotation les deux ou plusieurs courroies (10A, 10B, ...), sont entraînés par un moteur (15A).

3. Dispositif selon l'une quelconque des revendications 1 à 2, dans lequel les deux courroies ou plus de l'agencement à courroies jumelées (10) sont fabriquées à partir d'un matériau approuvé pour le contact alimentaire.

4. Dispositif selon l'une quelconque des revendications 1 à 3, dans lequel les deux ou plusieurs courroies maintiennent un motif sur leur surface extérieure (14).

5. Un système pour le retrait automatique de la graisse abdominale ou le saindoux en panne (3), ou d'une partie de celui-ci, d'un animal/carcasse abattu (4), présenté sur une ligne d'abattage (5) avec une cavité abdominale ouverte, lequel système comprend le éléments suivants:
• un convoyeur d'entrée (5) transportant la carcasse à traiter (4);
• un ou plusieurs montages (6), qui peuvent être mobiles ou statiques, pour fixer ou supporter au moins une partie de l'animal abattu (4) pendant le traitement;
• un robot industriel (2), en fonctionnement avec les moyens de traitement (8), lequel robot industriel (2) est monté avec le dispositif d'enlèvement de saindoux en panne (1) selon l'une quelconque des revendications 1 à 4; et
• un moyen de traitement (8), en communication avec le robot industriel (2), et en communication avec une base de données centrale (9) contenant des données sur l'animal abattu/carcasse à traiter.

6. Système selon la revendication 5, dans lequel la monture (6) est une monture mobile, adaptée pour accompagner la carcasse convoyée (4).

7. Système selon l'une quelconque des revendications 5 à 7, dans lequel le convoyeur d'entrée (5) porte un fournisseur d'identification (7A) contenant des données (précédemment enregistrées) de la carcasse en question (4), et lequel système comprend en outre un lecteur d'identification (7B), en communication avec les moyens de traitement (8).

8. Procédé de prélèvement automatique de graisse abdominale ou saindoux en panne (3), ou d'une partie de celui-ci, d'un animal abattu (4), constitué de deux demi-corps, suspendus par les pattes postérieures à une chaîne d'abattage, lequel procédé comprend les étapes suivantes de:
i. fournir une carcasse à traiter (4) sur un convoyeur d'entrée (5), supporté par un ou plusieurs montages (6), qui peuvent être mobiles ou statiques;
ii. diriger le dispositif d'enlèvement de feuilles de saindoux (1) des revendications 1 à 4, monté sur un robot industriel (2), vers la graisse abdominale (3) située à l'intérieur d'un côté des deux demi-corps de la carcasse (4) à traiter;
iii. en manipulant le robot industriel (2) à l'aide d'un moyen de traitement (8), en dirigeant le dispositif d'enlèvement de feuilles de saindoux (1) vers l'intérieur dans la cavité abdominale pour attraper et saisir la partie inférieure de la graisse abdominale (3) et en la soulevant vers le haut pour l'amener décoller de la face interne de la carcasse, pour finalement retirer et libérer la feuille de saindoux (3) de la carcasse (4);
iv. retirer le dispositif de retrait de feuilles de saindoux (1) de la carcasse (4) pour rejeter et libérer la graisse abdominale collectée (3);
v. diriger le dispositif d'enlèvement de feuilles de saindoux (1) selon les revendications 1 à 4 vers la graisse abdominale (3) située au niveau de l'autre demi-corps de la carcasse (4) en cours de traitement; et
vi. soumettre l'autre demi-corps de la carcasse aux étapes i-iv ci-dessus.

9. Procédé selon la revendication 10, dans lequel la monture (6) est un gabarit mobile, adapté pour accompagner la carcasse convoyée (4).

10. Procédé selon l'une quelconque des revendications 8 à 9, dans lequel le convoyeur d'entrée (5) porte un fournisseur d'identification (7A) contenant des données (précédemment enregistrées) de la carcasse en question (4), et lequel système comprend en outre un lecteur d'identification (7B), en communication avec les moyens de traitement (8).
